# EUROPEAN PATENT APPLICATION

(11) **EP 4 510 478 A1**
(43) Date of publication of application: **19.02.2025**
(21) Application number: 23787705.5
(22) Date of filing: 11.04.2023
(51) Int. Cl.: H04L 1/00

(54) **CSI MEASUREMENT AND REPORTING METHOD, APPARATUS, DEVICE AND SYSTEM, AND STORAGE MEDIUM**

(30) Priority: 12.04.2022 CN 202210384046
(71) Applicant: Vivo Mobile Communication Co., Ltd., Dongguan, Guangdong 523863 (CN)
(72) Inventor: ZENG, Chaojun, Dongguan, Guangdong 523863 (CN); PAN, Xueming, Dongguan, Guangdong 523863 (CN)
(74) Representative: Murgitroyd & Company
(86) International application number: PCT/CN2023/087626
(87) International publication number: WO 2023/198062

(57) **Abstract**

This application discloses a CSI measurement and reporting method and apparatus, a device, a system, and a storage medium, and belongs to the technical field of communications. The CSI measurement and reporting method of the embodiments of this application includes: obtaining, by a UE, target configuration information, where the target configuration information indicates CSI resource(s) for CSI measurement and reporting; and executing, by the UE, an operation related to CSI measurement and reporting according to a conflict situation of the CSI resource(s) corresponding to the target configuration information.

## Description

### CROSS-REFERENCE TO RELATED APPLICATIONS

This application claims the priority of Chinese Patent Application No. 202210384046.2 filed in China on April 12, 2022, the entire content of which is hereby incorporated by reference.

### TECHNICAL FIELD

This application belongs to the technical field of communications, and in particular, to a CSI measurement and reporting method and apparatus, a device, a system, and a storage medium.

### BACKGROUND

To facilitate a network side to obtain characteristics of a downlink channel between the network side and a user equipment (User Equipment, UE), in order to schedule downlink data transmission for the UE more effectively, a mechanism for measurement and reporting of channel state information (Channel State Information, CSI) is introduced.

In a flexible duplex mode, the network side can configure CSI resource(s) associated with CSI measurement and reporting to the UE. However, when some or all of resource elements (Resource Element, RE) occupied by these CSI resource(s) are not suitable for or cannot be used for downlink transmission, if the UE performs CSI measurement and reporting based on the existing technology, the accuracy and applicability of CSI measurement and reporting cannot be guaranteed.

### SUMMARY

Embodiments of this application provide a CSI measurement and reporting method and apparatus, a device, a system, and a storage medium, which can solve the problem of how a UE performs CSI measurement and reporting to improve the accuracy of CSI measurement and reporting or reduce the cost of CSI measurement and reporting.

In a first aspect, a CSI measurement and reporting method is provided. The CSI measurement and reporting method includes: obtaining, by a UE, target configuration information, where the target configuration information indicates CSI resource(s) for CSI measurement and reporting; and executing, by the UE, an operation related to CSI measurement and reporting according to a conflict situation of the CSI resource(s) corresponding to the target configuration information.

In a second aspect, a CSI measurement and reporting apparatus is provided, applied to a UE. The CSI measurement and reporting apparatus includes: an obtaining module and an execution module. The obtaining module is configured to obtain target configuration information, where the target configuration information indicates CSI resource(s) for CSI measurement and reporting; and the execution module is configured to execute an operation related to CSI measurement and reporting according to a conflict situation of the CSI resource(s) corresponding to the target configuration information.

In a third aspect, a CSI measurement and reporting method is provided. The CSI measurement and reporting method includes: sending, by a network side device, target configuration information to a UE, where the target configuration information indicates CSI resource(s) for CSI measurement and reporting, where the target configuration information is used for enabling the UE to execute an operation related to CSI measurement and reporting according to a conflict situation of the CSI resource(s) corresponding to the target configuration information.

In a fourth aspect, a CSI measurement and reporting apparatus is provided, applied to a network side device. The CSI measurement and reporting apparatus includes: a sending module. The sending module is configured to send target configuration information to a UE, where the target configuration information indicates CSI resource(s) for CSI measurement and reporting, where the target configuration information is used for enabling the UE to execute an operation related to CSI measurement and reporting according to a conflict situation of the CSI resource(s) corresponding to the target configuration information.

In a fifth aspect, a UE is provided. The UE includes a processor and a memory. The memory stores a program or an instruction runnable on the processor, and the program or instruction, when run by the processor, implements the steps of the method as described in the first aspect.

In a sixth aspect, a UE is provided, including a processor and a communication interface. The processor is configured to obtain target configuration information. The target configuration information indicates CSI resource(s) for CSI measurement and reporting; and execute an operation related to CSI measurement and reporting according to a conflict situation of the CSI resource(s) corresponding to the target configuration information.

In a seventh aspect, a network side device is provided. The network side device includes a processor and a memory. The memory stores a program or an instruction runnable on the processor, and the program or an instruction, when run by the processor, implements the steps of the method as described in the third aspect.

In an eighth aspect, a network side device is provided, including a processor and a communication interface. The communication interface is used for sending target configuration information to a UE. The target configuration information indicates CSI resource(s) for CSI measurement and reporting, where the target configuration information is used for enabling the UE to execute an operation related to CSI measurement and reporting according to a conflict situation of the CSI resource(s) corresponding to the target configuration information.

In a ninth aspect, a communications system is provided, including: a UE and a network side device. The UE may be configured to execute the steps of the CSI measurement and reporting method as described in the first aspect, and the network side device may be configured to execute the steps of the CSI measurement and reporting method as described in the third aspect.

In a tenth aspect, a readable storage medium is provided, having a program or an instruction stored thereon. The program or instruction, when run by a processor, implements the steps of the method as described in the first aspect, or implements the steps of the method as described in the third aspect.

In an eleventh aspect, a chip is provided. The chip includes a processor and a communication interface. The communication interface is coupled with the processor, and the processor is configured to run a program or instruction to implement the method as described in the first aspect, or to implement the method as described in the third aspect.

In a twelfth aspect, a computer program/program product is provided. The computer program/program product is stored in a storage medium. The computer program/program product is run by at least one processor to implement the steps of the CSI measurement and reporting method as described in the first aspect or the steps of the CSI measurement and reporting method as described in the third aspect.

In the embodiments of this application, after obtaining target configuration information, a UE execute an operation related to CSI measurement and reporting according to a conflict situation of the CSI resource(s) corresponding to the target configuration information. In this solution, in a flexible duplex mode, for CSI measurement and reporting, the UE can execute the operation related to CSI measurement and reporting according to the conflict situation of the CSI resource(s) configured by a network side and used for CSI measurement and reporting, so that this can avoid or relieve the impact caused by the conflict of the CSI resource(s) during CSI measurement and reporting, thereby improving the accuracy of CSI measurement and reporting and reducing the cost of CSI measurement and reporting.

### BRIEF DESCRIPTION OF THE DRAWINGS

FIG. 1 is a schematic architectural diagram of a wireless communication system according to an embodiment of this application;
FIG. 2 is a schematic diagram of a flexible duplex mode according to the related technology;
FIG. 3 is a schematic diagram I of a CSI measurement and reporting method according to an embodiment of this application;
FIG. 4 is a schematic diagram of CSI measurement and reporting in a flexible duplex mode according to an embodiment of this application;
FIG. 5 is a schematic diagram II of a CSI measurement and reporting method according to an embodiment of this application;
FIG. 6 is a schematic structural diagram I of a CSI measurement and reporting apparatus according to an embodiment of this application;
FIG. 7 is a schematic structural diagram II of a CSI measurement and reporting apparatus according to an embodiment of this application;
FIG. 8 is a schematic structural diagram of hardware of a communication device according to an embodiment of this application;
FIG. 9 is a schematic structural diagram of hardware of a UE according to an embodiment of this application; and
FIG. 10 is a schematic structural diagram of hardware of a network side device according to an embodiment of this application.

### DETAILED DESCRIPTION

The technical solutions in embodiments of this application are clearly described in the following with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

This specification and claims of this application, and terms "first" and "second" are used to distinguish similar objects, but are unnecessarily used to describe a specific sequence or order. It should be understood that terms used like this are interchangeable where appropriate, so that the embodiments of this application can be implemented in an order other than those illustrated or described here. Furthermore, objects distinguished by "first", "second", and the like are usually of the same class and do not limit the number of objects. For example, the first object can be one or multiple. In addition, "and/or" used in this specification and the claims represents at least one of the connected objects. Symbol "/" usually represents an "or" relationship between front and back associated objects.

It is worth noting that the technology described in the embodiments of this application is not limited to a long term evolution (Long Term Evolution, LTE)/LTE Evolution (LTE-Advanced, LTE-A) system, and can alternatively be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technology can be applied to both the aforementioned systems and radio technologies, as well as other systems and radio technologies. The following describes a new radio (New Radio, NR) system for the example purpose and uses the term NR in most of the following descriptions. However, these technologies can alternatively be applied to applications other than the NR system application, such as a 6th generation (6th Generation, 6G) communication system.

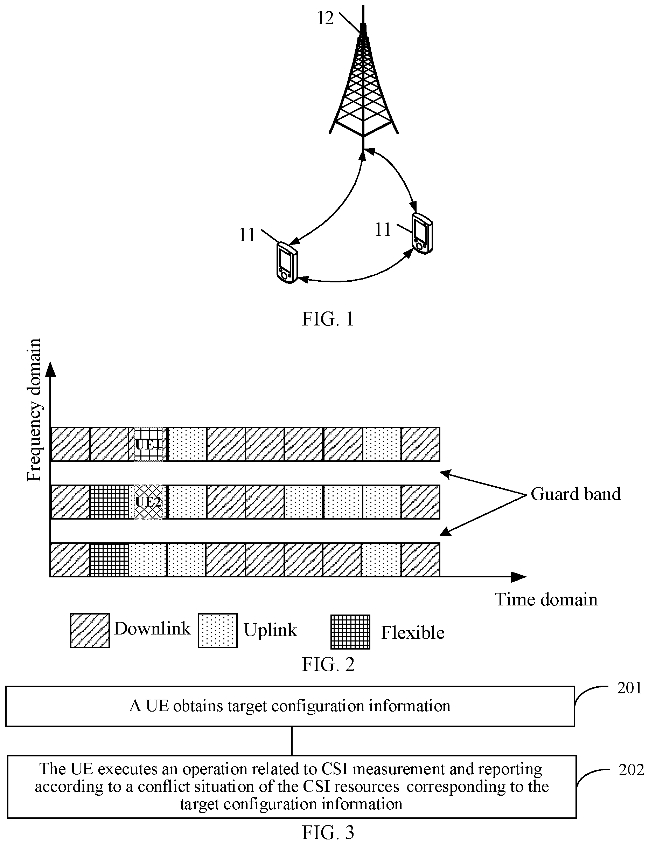

FIG. 1 shows a block diagram of a wireless communication system applicable to an embodiment of this application. The wireless communication system includes a UE 11 and a network side device 12. The UE 11 can be a mobile phone, a tablet personal computer (Tablet Personal Computer), a laptop computer (Laptop Computer) or alternatively referred to as a laptop, a personal digital assistant (Personal Digital Assistant, PDA), a handheld computer, a netbook, ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (home devices with wireless communication functions, such as a refrigerator, a television, a washing machine, or furniture), a game console, a personal computer (personal computer, PC), a teller machine, a vending machine, or other terminal side devices. The wearable device includes: a smart watch, a smart hand ring, a smart headphone, smart glasses, a smart jewelry (a smart bracelet, a smart ring, a smart necklace, a smart bangle, a smart anklet, and the like), a smart wristband, smart clothing, and the like. It should be noted, in the embodiments of this application, a specific type of the UE 11 is not limited. The network side device 12 may include an access network device or a core network device. The access network device 12 may alternatively be referred to as a radio access network device, a Radio Access Network (Radio Access Network, RAN), a radio access network function, or a radio access network unit. The radio access network device 12 can include a base station, a WLAN access point, a WiFi node, or the like. The base station can be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as the same technical effects are achieved. The base station is not limited to a particular technical vocabulary. It should be noted that, in the embodiments of this application, only the base station in the NR system is taken as an example, but a specific type of the base station is not limited.

Some concepts and/or terms involved in a CSI measurement and reporting method and apparatus, a device, a system, and a storage medium provided in the embodiments of this application will be explained below.

### 1. Flexible duplex (Flexible duplex)

During deployment of a traditional cellular network, frequency division duplex (Frequency Division Duplex, FDD) or time division duplex (Time Division Duplex, TDD) can be used based on an available frequency spectrum, service characteristics, and the like. When the FDD is used, uplink transmission and downlink transmission are at different frequency points, do not interfere with each other, and can be executed simultaneously. When the TDD is used, uplink transmission and downlink transmission are at the same frequency point and are executed alternately in a time-division manner.

To more flexibly use limited frequency spectrum resources, dynamically matching service requirements improves the resource utilization efficiency, and a flexible duplex mode is proposed. A flexible duplex mode is as follows: Full duplex on a network side: Namely, at the same moment, uplink transmission and downlink transmission can be executed simultaneously in different frequency domain positions. To avoid interference between uplink and downlink, a guard band can be reserved between frequency domain positions corresponding to different transmission directions (corresponding to duplex sub-bands). Half duplex on a UE side, which is consistent with TDD. At the same moment, only uplink transmission or downlink transmission is executed, namely, uplink transmission and downlink transmission cannot be executed simultaneously. It can be understood that in this duplex mode, the uplink transmission and the downlink transmission on the network side at the same moment can only aim at different UEs.

FIG. 2 shows a schematic diagram of the above flexible duplex mode. A network side divides a semi-static state of a frequency domain into three duplex sub-bands. In a third slot, UE1 and UE2 respectively execute downlink receiving and uplink transmission.

### 2. CSI measurement and reporting

To facilitate a network side to obtain characteristics (including rank indication (Rank Indication, RI)/precoding matrix indicator (Precoding Matrix Indicator, PMI)/channel quality indicator (Channel Quality Indicator, CQI), and the like) of a downlink channel between the network side and a UE to more effectively schedule downlink data transmission for this UE, a CSI measurement and reporting mechanism is introduced. In an NR, the CSI measurement and reporting mechanism is generalized, including allocation of time-frequency tracking resources and reference signal receiving power (Reference Signal Receiving Power, RSRP) measurement resources for the UE side, and the like.

Based on time-domain operational attributes of CSI measurement and reporting, as well as a type of an uplink channel carrying CSI reports, the following reporting configuration types (Reporting Config Types) can be distinguished: periodic CSI on physical Uplink Control Channel (Physical Uplink Control Channel, PUCCH) (Periodic CSI on PUCCH), semi-persistent CSI on PUCCH (semi-persistent CSI on PUCCH), semi-persistent CSI on PUSCH (Physical Uplink Shared Channel, PUSCH) (Semi-persistent CSI on PUSCH), and aperiodic CSI on PUSCH (Aperiodic CSI on PUSCH). Based on CSI-RS configurations that can be supported by various Reporting Config Types, it is known that the frequency of occurrence of CSI-RS resource(s) need to be no less than a reporting frequency of CSI Reports.

Based on reported content of CSI measurement and reporting, the following CSI report quantity can be distinguished: Values can be 'none', 'cri-RI-PMI-CQI', 'cri-RI-i1', 'cri-RI-i1-CQI', 'cri-RI-CQI', 'cri-RSRP', 'cri-SINR', 'ssb-Index-RSRP', 'ssb-Index-SINR'. and 'cri-RI-LI-PMI-CQI'.

Based on frequency granularities of reported information of CSI measurement and reporting, the following frequency granularities can be distinguished: Values can be wideband frequency-granularity (Wideband frequency-granularity) and sub-band frequency-granularity (Sub-band frequency-granularity). When CQI and/or PMI needs to be reported for a CSI Sub-band (namely, a sub-band determined in CSI Report Config based on sub-band Size; optionally, a CSI Sub-band set can be further determined based on a CSI-reporting frequency band (CSI-Reporting Band), it is considered that it corresponds to a sub-band frequency granularity.

A CSI measurement and reporting method provided by an embodiment of this application will be described in detail below through some embodiments and their application scenarios in combination with the accompanying drawings.

In the aforementioned flexible duplex mode, when some or all of REs occupied by CSI resource(s) associated with CSI measurement and reporting is not applicable to or cannot be used for downlink transmission based on configuration or indication of a network side, there is currently no definite solution of how a UE executes CSI measurement and reporting to improve the accuracy of CSI measurement and reporting, or reduce the cost of CSI measurement and reporting.

In the embodiments of this application, in the flexible duplex mode, to improve the accuracy of CSI measurement and reporting, or reduce the cost of CSI measurement and reporting, the UE can execute operation related to CSI measurement and reporting based on a conflict situation of CSI resource(s) configured by the network side for CSI measurement and reporting.

Specifically, in one solution I of this application (i.e. step 202a and step 202b and their related solutions below), a network side device provides redundant CSI measurement and reporting configuration information/configuration resources, and the UE selects some or all of the CSI measurement and reporting configuration information/configuration resources according to a conflict situation of CSI resource(s) corresponding to the CSI measurement and reporting configuration information/configuration resources, so as to avoid or reduce the conflict.

In another solution II of this application (i.e. step 202c and step 202g and their related solutions below), a UE executes a related operation during CSI measurement and reporting according to CSI measurement and reporting configuration information/configuration resources provided by a network side device and a conflict situation of CSI resource(s) corresponding to the CSI measurement and reporting configuration information/configuration resources, so as to avoid or reduce the conflict.

Optionally, in the embodiments of this application, the two solutions can be used in combination. For example, a network side provides redundant CSI measurement and reporting configuration information/configuration resources, and the UE selects some or all of the CSI measurement and reporting configuration information/configuration resources according to a conflict situation of CSI resource(s) corresponding to the CSI measurement and reporting configuration information/configuration resources. When the CSI resource(s) corresponding to the configuration information used by the UE have a conflict, the UE can further use solution II: The UE executes a related operation during CSI measurement and reporting according to the conflict of the CSI resource(s) corresponding to the CSI measurement and reporting configuration information/configuration resources, so as to further avoid or reduce the conflict.

Specifically, this embodiment of this application provides a CSI measurement and reporting method. FIG. 3 shows a flowchart of a CSI measurement and reporting method provided by this embodiment of this application. As shown in FIG. 3, the CSI measurement and reporting method provided by this embodiment of this application may include step 201 and step 202 below.

Step 201. A UE obtains target configuration information.

In this embodiment of this application, the target configuration information indicates CSI resource(s) for CSI measurement and reporting.

Optionally, in this embodiment of this application, the UE may obtain the target configuration information by any one of the following: predefinition, preconfiguration, agreement, and network side configuration.

Step 202. The UE executes an operation related to CSI measurement and reporting according to a conflict situation of the CSI resource(s) corresponding to the target configuration information.

In this embodiment of this application, the conflict situation of the CSI resource(s) may be understood as follows: whether the CSI resource(s) have a conflict and a conflict level of the CSI resource.

Optionally, in this embodiment of this application, a mode for determining whether the CSI resource(s) have a conflict is: in a case that an RE occupied by one CSI resource or a predefined transmission occasion of the CSI resource satisfies a preset condition, the CSI resource has a conflict. The preset condition is that the RE is within a guard band configured by a network side, or the RE is configured/indicated by the network side as an RE for uplink transmission or a flexible RE.

It should be noted, when an RE is in the guard band configured by the network side, or an RE is configured/indicated by the network side as an RE for uplink transmission or a flexible RE, the RE is determined to be invalid, namely, the RE satisfies the preset condition.

In this embodiment of this application, the conflict level of the CSI resource(s) may be understood as follows: The number or a proportion of REs occupied by the CSI resource(s) or the predefined transmission occasion(s) of the CSI resource(s), which are determined to be invalid, can be further understood as the number of REs determined to be invalid, among all REs occupied by the CSI resource(s) or the predefined transmission occasion(s) of the CSI resource(s), or a ratio of a number of REs determined to be invalid to a number of all the REs.

For a CSI reporting configuration (i.e. CSI configuration information), the conflict level can be understood as: a single value determined based on conflict levels of various CSI resource(s) associated with/corresponding to this CSI reporting configuration, such as an average value of the conflict levels of the various CSI resource(s); or, a single value determined based on conflict levels of various CSI resource(s) associated with this CSI reporting configuration and used for a specific purpose (e.g. channel measurement), such as an average value of the conflict levels of the various CSI resource(s); or, the number of REs determined to be invalid, among all REs occupied by various CSI resource(s) associated with this CSI reporting configuration, or a ratio of the number of REs determined to be invalid to the number of all the REs; or, the number of REs determined to be invalid, among all REs occupied by various CSI resource(s) associated with this CSI reporting configuration and used for a special purpose, or a ratio of the number of REs determined to be invalid to the number of all the REs; or, the number of REs determined to be invalid, among all REs occupied by the predefined transmission occasion(s) of the CSI resource(s) (i.e. the various CSI resource(s) associated with this CSI reporting configuration or the various CSI resource(s) associated with this CSI reporting configuration and used for a special purpose), or a ratio of the number of REs determined to be invalid to the number of all the REs. It should be noted, if the above number or ratio is smaller, it can be understood that the conflict level is smaller.

Optionally, in this embodiment of this application, the CSI resource(s) corresponding to the target configuration information may include at least one of the following:
a non-zero power channel state information-reference signal (Non-Zero Power Channel State Information-Reference Signal, NZP CSI RS) resource or resource set for channel measurement;
NZP CSI-RS resource(s) or NZP CSI-RS resource set(s) for interference measurement;
NZP CSI-RS resource(s) or NZP CSI-RS resource set(s) for both channel measurement and interference measurement; and
a channel state information-interference measurement (Channel State Information-Interference Measurement, CSI- IM) resource or resource set for interference measurement.

Optionally, in an implementation of this embodiment of this application, step 202 above may be specifically achieved through following step 202a.

Step 202a. In a case that the target configuration information includes a plurality of sets of configuration information, the UE determines first configuration information from the plurality of sets of configuration information, and executes CSI measurement and reporting based on CSI resource(s) corresponding to the first configuration information.

In this embodiment of this application, the first configuration information is configuration information among the plurality of sets of configuration information, the CSI resource(s) corresponding to the configuration information have no conflict or have a conflict with smallest level.

It can be understood that the network side configures a plurality of sets of configuration information (CSI Report Config), and the UE only selects CSI Report Config, associated with/corresponding to CSI resource(s) having no conflict or having the smallest conflict, for CSI measurement and reporting.

Optionally, in this embodiment of this application, "the UE determines first configuration information from the plurality of sets of configuration information" in step 202a above may be specifically achieved by step 202a1 or step 202a2 below.

Step 202a1. The UE determines N sets of configuration information among at least one set of second configuration information as the first configuration information.

In this embodiment of this application, each set of second configuration information among the at least one set of second configuration information is configuration information, among the plurality of sets of configuration information, which is associated with a time unit and corresponds to the CSI resource(s) having no conflict, and N is a positive integer.

Step 202a2. For a target CSI reporting type, the UE determines N sets of configuration information among at least one set of second configuration information as the first configuration information.

In this embodiment of this application, assuming that an RE occupied by a CSI resource associated with/corresponding to a set of configuration information, or a CSI resource for a special purpose (e.g. channel measurement), or a predefined transmission occasion of this resource is in a time unit (e.g. a slot), it considers that this set of configuration information is associated with the time unit.

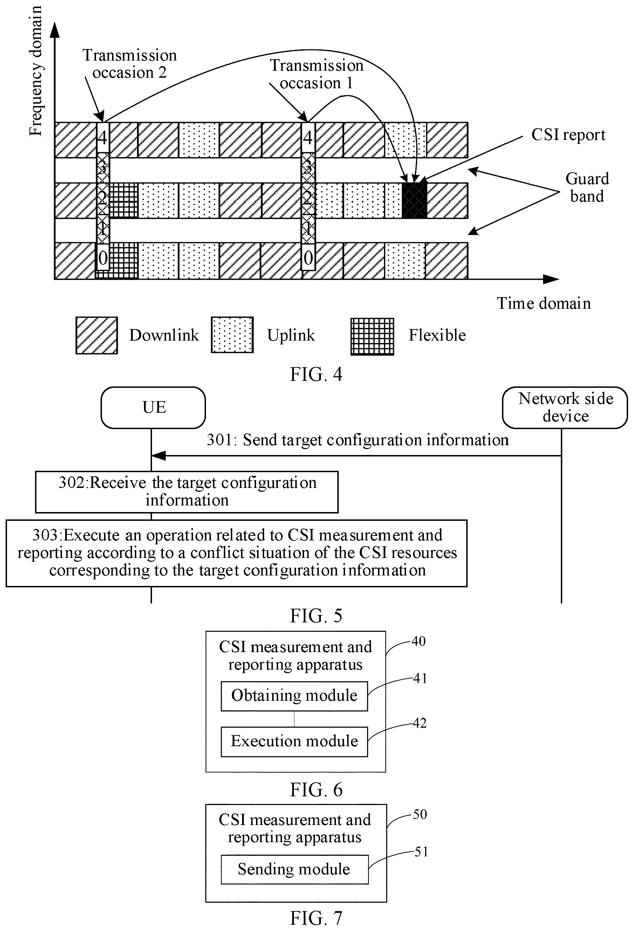

When a CSI resource is an aperiodic (Aperiodic) CSI resource, this CSI resource only corresponds to a single transmission occasion (e.g. FIG. 4 only involves transmission occasion 1 of the CSI resource), or this CSI resource does not involve the concept of transmission occasion (because it only corresponds to a single transmission in the time domain). The above description is applied to this CSI resource or the single transmission occasion corresponding to this CSI resource.

When a CSI resource is a periodic (Periodic) CSI resource or a semi-persistent (Semi-persistent) CSI resource, this CSI resource corresponds to a plurality of transmission occasions (e.g. FIG. 4 shows transmission occasion 1 and transmission occasion 2 corresponding to this CSI resource. Based on a period of configuration of this CSI resource, ahead of a timeline, there may be more transmission occasions corresponding to this CSI resource). The predefined transmission occasion mentioned above is one or more of the plurality of transmission occasions. For example, the predefined transmission occasion is a single latest transmission occasion where transmission time of the CSI resource relative to the CSI report is no later than a CSI reference resource (reference resource) (the time domain corresponds to a single downlink slot).

Optionally, in this embodiment of this application, the above N sets of configuration information are determined by the UE according to at least one of the following: CSI reporting type information, and identifier information of the configuration information.

It can be understood that for CSI Report Config (i.e. at least one set of second configuration information mentioned above) that is associated with a time unit and associated with CSI resource(s) having no conflict, the UE selects one or more sets of CSI Report Config for corresponding CSI measurement and reporting. When the number of candidate CSI Report Config is higher than a desired number (e.g. N), the UE can execute selection based on CSI Report Config ID (the identifier information of the configuration information). For example, the UE selects one or more sets of CSI Report Config with the smallest or largest CSI Report Config ID. Optionally, UE may alternatively select CSI Report Config based on the CSI reporting type information, for example, provide a predefined sorting rule for various CSI reporting types, and select one or more sets of CSI Report Config therefrom. Optionally, when the number of CSI Report Config corresponding to a CSI reporting type exceeds a desired number, the UE can further execute selection based on the CSI Report Config ID.

Regarding CSI Report Config that is associated with a time unit and associated with CSI resource(s) having no conflict, for a CSI reporting type, the UE selects one or more sets of CSI Report Config for corresponding CSI measurement and reporting.

Particularly, when the CSI resource(s) corresponding to the various pieces of configuration information, associated with a time unit, among the plurality of sets of configuration information all have conflicts, the UE does not need to execute the CSI measurement and reporting operation for this time unit.

Optionally, in this embodiment of this application, the above CSI reporting type information is determined based on at least one of the following: a CSI report quantity, a CSI reporting configuration type, a CSI granularity in frequency domain, and a type of a channel that carries CSI reporting.

Optionally, in this embodiment of this application, a value of the CSI report quantity (Report Quantity) may include at least one of the following: 'none', 'cri-RI-PMI-CQI', 'cri-RI-i1', 'cri-RI-i1-CQI', 'cri-RI-CQI', 'cri-RSRP', 'cri-SINR', 'ssb-Index-RSRP', 'ssb-Index-SINR', and 'cri-RI-LI-PMI-CQI'.

Optionally, In this embodiment of this application, the value of the CSI reporting configuration type (Reporting Config Type) may include at least one of the following: periodic CSI on PUCCH (Periodic CSI on PUCCH), semi-persistent CSI on PUCCH (Semi-persistent CSI on PUCCH), semi-persistent CSI on PUSCH (Semi-persistent CSI on PUSCH), and aperiodic CSI on PUSCH (Aperiodic CSI on PUSCH).

Optionally, in this embodiment of this application, the CSI granularity in frequency domain mentioned above is a granularity in frequency domain for the report quantity. A value of the CSI granularity in frequency domain may include at least one of the following: wideband frequency-granularity (Wideband frequency-granularity) and sub-band frequency-granularity (Sub-band frequency-granularity).

Optionally, in this embodiment of this application, a value of the type of the channel that carries CSI reporting may include at least one of the following: CSI reporting on PUCCH (CSI Reporting on PUCCH) and CSI reporting on PUSCH (CSI Reporting on PUSCH).

Optionally, in this embodiment of this application, "the UE determines first configuration information from the plurality of sets of configuration information" in step 202a above may be specifically achieved by step 202a3 or step 202a4 below.

Step 202a3. The UE determines M sets of configuration information among at least one set of third configuration information as the first configuration information.

In this embodiment of this application, each set of third configuration information among the above at least one set of third configuration information is configuration information, among the plurality of sets of configuration information, which is associated with a time unit; the M sets of configuration information are configuration information among the at least one set of third configuration information, and the corresponding CSI resource(s) have a conflict with smallest level; and M is a positive integer.

Step 202a4. For a target CSI reporting type, the UE determines M sets of configuration information among at least one set of third configuration information as the first configuration information.

It can be understood that for CSI Report Config (i.e. at least one set of third configuration information mentioned above) that is associated with a time unit, the UE selects one or more sets of CSI Report Config with a conflict with smallest level for corresponding CSI measurement and reporting. For CSI Report Config with equal conflict levels, the UE can execute selection based on CSI Report Config ID (the identifier information of the configuration information), for example, selecting CSI Report Config with a small or large CSI Report Config ID. Optionally, For CSI Report Config with equal conflict levels, the UE may alternatively select CSI Report Config based on the CSI reporting type information, for example, provide a predefined sorting rule for various CSI reporting types, and select CSI Report Config ranked at the front or the back.

Regarding CSI Report Config that is associated with a time unit, for a CSI reporting type, the UE selects one or more sets of CSI Report Config with a conflict with smallest degree for corresponding CSI measurement and reporting.

Optionally, in this embodiment of this application, the above M sets of configuration information are determined by the UE according to at least one of the following: CSI reporting type information, and identifier information of the configuration information.

In this embodiment of this application, the UE can select, according to the conflict situation of the CSI resource(s) corresponding to the configuration information of CSI measurement and reporting from the plurality of sets of configuration information, the configuration information corresponding to the CSI resource(s) having no conflict or having a conflict with smallest level for CSI measurement and reporting, to avoid or reduce the conflict, thereby improving the accuracy of CSI measurement and reporting or reducing the cost of CSI measurement and reporting.

Optionally, in another implementation of this embodiment of this application, step 202 above may be specifically achieved through following step 202b.

Step 202b. In a case that the target configuration information includes fourth configuration information corresponding to a plurality of sets of CSI resource(s), the UE determines target CSI resource(s) from the plurality of sets of CSI resource(s), and executes CSI measurement and reporting based on the target CSI resource(s).

In this embodiment of this application, in a case that the target configuration information is at least one set of configuration information and the fourth configuration information among the at least one set of configuration information corresponds to the plurality of sets of CSI resource(s), the UE determines the target CSI resource(s) from the plurality of sets of CSI resource(s). The fourth configuration information is any set of configuration information among the at least one set of configuration information, and the target CSI resource(s) are CSI resource(s), among the plurality of sets of CSI resource(s), which have no conflict or have a conflict with smallest level.

It can be understood that the network side configures a plurality of sets of CSI resource(s) for a CSI resource associated with a set of configuration information (CSI Report Config) and used for a special purpose, and the UE selects the CSI resource(s) having no conflict or having a conflict with smallest level for corresponding CSI measurement and reporting.

Optionally, in this embodiment of this application, CSI resource(s) for various purposes or a particular purpose may include at least one of the following: CSI resource(s) for channel measurement, CSI resource(s) for interference measurement, and the like. The CSI resource(s) used for interference measurement may further include NZP CSI-RS for interference measurement and CSI-IM for interference measurement.

It should be noted, each set of CSI resource(s) in this embodiment of this application can be understood as a resource or resource set for a purpose, such as a NZP CSI-RS resource set (NZP CSI-RS Resource Set), a synchronization signal block (Synchronization Signal Block, SSB) resource set, and a CSI-IM resource set (CSI-IM Resource Set). For example, the network side configures a plurality of NZP CSI-RS Resource Sets for channel measurement for a set of configuration information, and the UE selects one NZP CSI-RS Resource Set among the plurality of NZP CSI-RS Resource Sets for channel measurement.

Optionally, in this embodiment of this application, "the UE determines target CSI resource(s) from the plurality of CSI resource(s)" in step 202b may be specifically achieved by step 202b1 or step 202b2 below.

Step 202b1. The UE determines K sets of CSI resource(s) among at least one set of first CSI resource(s) as the target CSI resource(s).

In this embodiment of this application, the at least one set of first CSI resource(s) are CSI resource(s), among the plurality of sets of CSI resource(s), which are used for specific measurement and have no conflict, and K is a positive integer.

Optionally, in this embodiment of this application, the above K sets of CSI resource(s) are determined by the UE according to at least one of the following: identifier information of the CSI resource(s)/ CSI resource set(s), and bandwidths and/or port number(s) corresponding to the CSI resource(s).

In this embodiment of this application, for a purpose of a set of configuration information (CSI Report Config), the UE selects one or more sets of CSI resource(s) from the CSI resource(s) having no conflict for measurement of this purpose. When the number of sets of candidate CSI resource(s) exceeds a desired number (e.g. K), the UE can execute selection based on resource identifiers or resource set identifiers, for example, selecting resources/resource sets with the smallest or largest resource identifiers/resource set identifiers. Optionally, the UE can alternatively select resources/resource sets based on the number of bandwidths (e.g. the number of physical resource blocks (Physical Resource Block, PRB) crossed by the resources/resource sets, the number of corresponding CSI sub-bands, and the port number(s), for example, selecting resources or resource sets with the largest bandwidths.

Specifically, when CSI resource(s) for specific measurement among the plurality of CSI resource(s) have conflicts, the UE does not need to execute the CSI measurement and reporting operation on the fourth configuration information.

Step 202b2. The UE determines L sets of CSI resource(s) among at least one set of second CSI resource(s) as the target CSI resource(s).

In this embodiment of this application, the at least one set of second CSI resource(s) are CSI resource(s), among the plurality of sets of CSI resource(s), which are used for specific measurement; the L sets of CSI resource(s) are CSI resource(s), among the at least one set of second CSI resource(s), which have a conflict with smallest level; and L is a positive integer.

Optionally, in this embodiment of this application, the above L sets of CSI resource(s) are determined by the UE according to at least one of the following: identifier information of the CSI resource(s)/ CSI resource set(s), and bandwidths and/or port numbers(s) corresponding to the CSI resource(s).

In this embodiment of this application, for a purpose of a set of configuration information (CSI Report Config), the UE selects one or more sets of CSI resource(s) having a conflict with smallest level for measurement of this purpose. For CSI resource(s) with equal conflict levels, the UE can execute selection based on resource identifiers or resource set identifiers, such as selecting resources/resource sets with small or large resource identifiers/resource set identifiers. Optionally, for CSI resource(s) with equal conflict levels, the UE can select resources/resource sets based on bandwidths, port number(s), and the like, such as selecting resources/resource sets with large bandwidths.

Optionally, in this embodiment of this application, for each set of configuration information among the plurality of sets of configuration information or the at least one set of configuration information, the CSI resource(s) corresponding to the set of configuration information includes at least one of the following:
NZP CSI-RS resource(s) or NZP CSI-RS resource set(s) for channel measurement;
NZP CSI-RS resource(s) or NZP CSI-RS resource set(s) for interference measurement;
NZP CSI-RS resource(s) or NZP CSI-RS resource set(s) for both channel measurement and interference measurement; and
CSI-IM resource(s) or CSI-IM resource set(s) for interference measurement.

In this embodiment of this application, the UE can determine the target CSI resource(s) from the plurality of CSI resource(s) corresponding to any configuration information according to the conflict situation of the CSI resource(s) corresponding to the configuration information of CSI measurement and reporting for CSI measurement and reporting, to avoid or reduce the conflict, thereby improving the accuracy of CSI measurement and reporting or reducing the cost of CSI measurement and reporting.

Optionally, in this embodiment of this application, step 202 above may be specifically achieved through any one of step 202c to step 202g below.

Step 202c. The UE executes CSI measurement and reporting on the CSI resource(s) corresponding to the target configuration information based on a preset rule.

In this embodiment of this application, the UE does not make additional judgment or assumption to possible conflicts when receiving NZP CSI-RS or measuring CSI-IM. For example, the UE assumes that there are valid CSI-RS transmissions on all REs occupied by NZP CSI-RS resource(s) associated with a set of configuration information (CSI Report Config) or predefined transmission occasion(s) of the NZP CSI-RS resource(s), and/or the UE assumes that valid interference situations can be measured on all REs occupied by CSI-IM resources associated with a set of configuration information or predefined transmission occasion(s) of the CSI-IM resources.

After receiving a CSI report corresponding to this set of configuration information based on the preset rule, the network side can directly use information in this CSI report, or discard some/all of the information in this CSI report, or modify some or all of the information in this CSI report according to the NZP CSI-RS resource(s) and/or CSI-IM resources associated with/corresponding to this CSI report or the predefined transmission occasion(s) of the resources and an actual occupancy situation of all the REs.

Step 202d. The UE determines available transmission occasion(s) for the CSI resource(s) corresponding to the target configuration information, and executes, for the available transmission occasion(s), CSI measurement and reporting.

In this embodiment of this application, the UE can search for available transmission occasion(s) for the various CSI resource(s) associated with CSI measurement and reporting, and execute CSI measurement and corresponding reporting on this/these transmission occasion(s).

Optionally, in this embodiment of this application, regarding a periodic/semi-persistent CSI resource corresponding to the target configuration information, the UE can determine available transmission occasion(s) for the CSI resource, and execute, for the available transmission occasion(s), CSI measurement and reporting. An aperiodic CSI resource corresponding to the target configuration information only corresponds to a single transmission occasion or does not involve the concept of transmission occasion, namely, the solution of step 202d above is not applicable to the aperiodic CSI resource. Or, regarding an aperiodic CSI resource, the UE can directly determine whether the resource is an available transmission occasion, or the single transmission occasion corresponding to the resource is an available transmission occasion.

Optionally, in this embodiment of this application, "the UE determines available transmission occasion(s) for the CSI resource(s) corresponding to the target configuration information" in step 202d may be specifically achieved by step 202d1 or step 202d2 below.

Step 202d1. In a case that the target configuration information is configured with time restriction information for specific measurement, for a fourth CSI resource for specific measurement, which correspond to the target configuration information, the UE determines latest available transmission occasions of the fourth CSI resource as available transmission occasion(s) of the fourth CSI resource.

Step 202d2. In a case that the target configuration information is not configured with time restriction information for specific measurement, for a fourth CSI resource for specific measurement, which correspond to the target configuration information, the UE determines one or more latest available transmission occasions of the fourth CSI resource as available transmission occasions of the fourth CSI resource.

In this embodiment of this application, when the CSI Report Config corresponding to CSI measurement and reporting is configured with time restriction for channel measurements (Time Restriction For Channel Measurements) or time restriction for interference measurements (Time Restriction For Interference Measurements), the UE only searches for latest single available transmission occasion(s) for a CSI resource. When the CSI Report Config corresponding to CSI measurement and reporting is not configured with the time restriction for channel measurements or time restriction for interference measurements, the UE can search for one or more available transmission occasions for a CSI resource (typically searching for one or more latest available transmission occasions, which can be determined based on UE implementation), and unified measurements are executed on the one or more available transmission occasions, or measurement results of the various available transmission occasions among the one or more available transmission occasions are averaged or smoothed. Optionally, the UE will average or smooth the measurement results obtained from the plurality of available transmission occasions and historical measurement results.

Optionally, in this embodiment of this application, in a case that the fourth CSI resource means a resource set, the resource set corresponds to one available transmission occasion, or various resources in the resource set respectively correspond to one available transmission occasion.

It can be understood that during searching of available transmission occasion(s) for a CSI resource, if this CSI resource corresponds to a single resource set (e.g. the NZP CSI-RS Resource Set, the SSB Resource Set, and the CSI-IM Resource Set), available transmission occasion(s) can be searched uniformly for this resource set, or available transmission occasion(s) can be searched separately for various resources in this resource set.

Optionally, in this embodiment of this application, in a case that a reporting frequency band of the configuration information corresponding to the fourth CSI resource corresponds to a plurality of CSI sub-bands, the available transmission occasion(s) of the fourth CSI resource are any one of the following: available transmission occasion(s) determined based on a frequency band corresponding to the fourth CSI resource, available transmission occasion(s) determined based on the reporting frequency band of the configuration information corresponding to the fourth CSI resource, and available transmission occasion(s) determined based on the various CSI sub-bands respectively.

It can be understood that during searching for available transmission occasion(s) for a CSI resource, if the CSI Report Config associated with this CSI resource corresponds to a plurality of CSI Sub-bands in the frequency domain (all CSI Sub-bands form a CSI reporting frequency band (CSI Reporting Band) of the configuration information corresponding to the CSI resource), it is possible to search for available transmission occasion(s) for a frequency domain bandwidth configured by the CSI resource itself, or to uniformly search for available transmission occasion(s) for the CSI Reporting Band, or to search for available transmission occasions separately for the various CSI Sub-bands.

Optionally, in this embodiment of this application, the above available transmission occasion(s) are transmission occasion(s) that satisfy a first condition, and the first condition includes at least one of the following:

Condition 1. A conflict situation in a first frequency band meets a preset requirement. The preset requirement includes at least one of the following: the CSI resource(s) have no conflict, a ratio of a number of REs that are determined to satisfy a preset condition to a number of all REs is less than or not higher than a second threshold, the number of REs that are determined to satisfy the preset condition is less than or not higher than a third threshold, and a number of REs that are determined to not satisfy the preset condition is higher than or no less than a fourth threshold. The first frequency band is any one of the following: a frequency band configured for CSI resource(s), the reporting frequency band of the configuration information corresponding to the CSI resource(s), and one CSI sub-band among the plurality of CSI sub-bands corresponding to the reporting frequency band of the configuration information corresponding to the CSI resource(s).

Condition 2. Being no later than a CSI reference resource (the time domain corresponds to a single DL slot).

Step 202e. The UE executes CSI measurement on the CSI resource(s) corresponding to the target configuration information based on a preset rule, and in a case that third CSI resource(s) have a conflict, executes CSI reporting by using a target reporting mode.

In this embodiment of this application, the third CSI resource(s) are CSI resource(s) used during the CSI measurement.

Optionally, in this embodiment of this application, the third CSI resource(s) may further include CSI resource(s) used during the execution of CSI measurement and transmission occasion(s) of the CSI resource(s) determined based on a preset rule.

Optionally, in this embodiment of this application, the target reporting mode includes at least one of the following:
(1) In a case that the CSI resource(s) corresponding to the target configuration information have a conflict, or the conflict of the CSI resource(s) corresponding to the target configuration information is higher than or no less than the first threshold, the UE does not execute/ignores CSI reporting corresponding to the target configuration information.
   It can be understood that in mode (1), regarding a set of configuration information (CSI Report Config) associated with CSI resource(s) having a conflict, or a set of configuration information with a conflict level higher than or no less than the first threshold, the UE can ignore the corresponding CSI reporting, namely, it considers that a CSI report corresponding to this set of configuration information does not need to be transmitted.
(2) In a case that the UE needs to report sub-band CSI (Sub-band CSI), the UE only reports sub-band CSI corresponding to an available CSI sub-band.

Optionally, in this embodiment of this application, whether the UE needs to report the sub-band CSI and/or wideband CSI is determined based on the target configuration information. The CSI may include an RI, a layer indicator (Layer Indicator, LI), a PMI, a CQI, RSRP, a signal to interference and noise ratio (Signal to Interference and Noise Ratio, SINR), and the like.

It should be noted, in this embodiment of this application, for a CSI sub-band in the CSI reporting frequency band (CSI Reporting Band), if the CSI resource associated with a CSI Report Config has a conflict in this CSI sub-band, or if the conflict level of the CSI Report Config in this CSI sub-band is higher than or no less than the first threshold, it considers that this CSI sub-band is not an available CSI sub-band or is an unavailable CSI sub-band.

It can be understood that in mode (2), when the UE needs to report the sub-band CSI, during organization of a CSI report corresponding to the CSI Report Config, the sub-band CSI corresponding to a CSI sub-band determined to be an unavailable CSI sub-band is not included in this CSI report.

(3) In a case that the UE needs to report wideband CSI (Wideband CSI), the UE reports wideband CSI corresponding to an available CSI sub-band set.

It should be noted, in mode (3), when the UE needs to report the wideband CSI, the UE only derives the wideband CSI based on REs occupied by the CSI resource(s) associated with the current CSI Report Config or the predefined transmission occasion(s) of the CSI resource(s) within a frequency domain range corresponding to a set of all available CSI sub-bands (rather than the CSI reporting frequency band).

(4) In a case that the UE needs to report sub-band CSI, the UE reports an invalid value for sub-band CSI corresponding to an unavailable CSI sub-band.

The invalid value in this embodiment of this application can be understood as an invalid value specified by a protocol or configured by a high-level signaling. In the NR, CQI index 0 corresponds to Out-of-range, which can be considered as an invalid value for CQI. For CSI information other than CQI, such as RI, LI, PMI, RSRP, and SINR, corresponding invalid values can alternatively be specified by the protocol or configured by a high-level signaling.

It can be understood that in mode (4), when the UE needs to report the sub-band CSI, during organization of a CSI report corresponding to the CSI Report Config, the sub-band CSI corresponding to the various CSI sub-bands corresponding to the configured CSI reporting frequency band are all included in this CSI report. The sub-band CSI corresponding to a CSI sub-band determined to be an unavailable CSI sub-band is set to a corresponding invalid value, and the sub-band CSI corresponding to a CSI sub-band determined to be an available CSI sub-band can be measured and set according to an existing rule.

(5) In a case that the UE needs to report wideband CSI and a CSI reporting frequency band (CSI Reporting Band) contains unavailable CSI sub-band(s), the UE reports an invalid value for the wideband CSI.

(6) In a case that the UE needs to report sub-band CSI, the UE does not update sub-band CSI corresponding to unavailable CSI sub-band(s).

It can be understood that in mode (6), when the UE needs to report the sub-band CSI, during organization of a CSI report corresponding to the CSI Report Config, the sub-band CSI corresponding to the various CSI sub-bands corresponding to the configured CSI reporting frequency band are all included in this CSI report. The sub-band CSI corresponding to a CSI sub-band determined to be an unavailable CSI sub-band is set to sub-band CSI that is recently measured or reported by the CSI sub-band (when the CSI sub-band does not have the recently measured or reported sub-band CSI, or when a time interval between measurement time or reporting of the recently measured or reported sub-band CSI and the current reporting time exceeds or is not shorter than a predefined value, the sub-band CSI corresponding to the CSI sub-band can be set to a default value), and the sub-band CSI corresponding to a CSI sub-band determined to be an available CSI sub-band can be measured and set according to an existing rule.

(7) In a case that the UE needs to report wideband CSI, the UE determines reported wideband CSI based on sub-band CSI corresponding to target sub-bands. The target sub-bands are various CSI sub-bands corresponding to the reporting frequency band.

(8) The UE is not required to update a CSI report.

Optionally, in this embodiment of this application, the target reporting mode includes: The UE is not required to update a CSI report. The target reporting mode includes any one of the following:
the UE reports a first CSI report, where the first CSI report is a CSI report that is recently reported for the target configuration information; and
the UE reports a second CSI report, where all pieces of information in the second CSI report are set to corresponding invalid values or default values.

In this embodiment of this application, in mode (8), the UE is not required to update the CSI report. The UE can report the most recently reported CSI report for CSI Report Config, or the UE reports invalid values (i.e. invalid values, such as Out-of-range) or default values (which can correspond to more conservative values specified by a protocol or configured by a high-level signaling, such as RI=1 and CQI index=6) for various pieces of information involved in the CSI report. For example, for an aperiodic CSI Report Config, if the UE has never reported a corresponding CSI report for this CSI Report Config, the UE organizes the corresponding CSI report according to a configuration or a specified format, but all pieces of information contained in this CSI report are set to corresponding invalid values/default values. When the UE has reported a corresponding CQI report for this CSI Report Config, the UE directly retransmits this CQI report. Or, when the time interval between the previous transmission time of this CQI report and the current reporting time is less than or does not exceed a predefined value, the UE retransmits this CQI report. Otherwise, the UE reports a CQI report in which all pieces of information are set to invalid values/default values.

It should be noted, the target reporting mode includes mode (7) and mode (2): (a) When the UE needs to report sub-band CSI, the UE only reports sub-band CSI corresponding to an available CSI sub-band. (b) When the UE needs to report wideband CSI, the UE determines reported wideband CSI based on the sub-band CSI corresponding to the target sub-bands (the various CSI sub-bands corresponding to the CSI reporting frequency band). There may be unavailable CSI sub-band(s) among the CSI sub-bands corresponding to the CSI reporting frequency band. At this time, based on the recently measured or reported sub-band CSI of this/these unavailable CSI sub-band(s), or the default value, and the sub-band CSI corresponding to other available CSI sub-bands, the wideband CSI is derived.

It should be noted, mode (2) can be used in conjunction with mode (3) (when the UE needs to report both the sub-band CSI and the wideband CSI based on the corresponding CSI Report Config, the UE can use mode (2) and mode (3) respectively for the sub-band CSI and the wideband CSI); mode (4) can be used in conjunction with mode (5) (when the UE needs to report both the sub-band CSI and the wideband CSI based on the corresponding CSI Report Config, the UE can use mode (4) and mode (5) respectively for the sub-band CSI and the wideband CSI); and mode (6) can be used in conjunction with mode (7) (when the UE needs to report both the sub-band CSI and the wideband CSI based on the corresponding CSI Report Config, the UE can use mode (6) and mode (7) respectively for the sub-band CSI and the wideband CSI). There is no limitation on other possible combined uses of the modes (For example, mode (2) and mode (7) can be used in conjunction. At this time, the sub-band CSI corresponding to the unavailable CSI sub-band(s) will not be reported, but is used for deriving the wideband CSI).

Based on mode (1), when the UE needs to report a CSI report, the number of bits corresponding to all the pieces of information contained in the CSI report and the total number of bits in the CSI report are consistent with the existing technology. Mode (3)/(4)/(5)/(6)/(7)/(8) does not change the number of bits of the corresponding information in the CSI report in the existing technology. Mode (2) may change the number of bits of the corresponding information in the CSI report in the existing technology. When the number of bits changes (or decreases), the expense of CSI reporting can be reduced.

Step 202f. The UE does not expect that the CSI resource(s) corresponding to the CSI measurement and reporting have a conflict.

Step 202g. The UE does not expect that the conflict level of the CSI resource(s) corresponding to the CSI measurement and reporting is higher than or no less than a first threshold.

In this embodiment of this application, the UE does not expect that the various CSI resource(s) associated with CSI measurement and reporting have a conflict, or the conflict level is higher than or no less than the first threshold. For a CSI Report Config, the UE does not expect that the CSI resource(s) associated with the CSI Report Config have a conflict, or the UE does not expect that the conflict level is higher than or no less than a predefined threshold.

Optionally, in this embodiment of this application, the solution of step 202e can be combined with the solution of step 202d. For example, the solution of step 202d can be applied first, and the solution of step 202e can be applied based on the conflict situation of transmission occasion(s) of a CSI resource application. The transmission occasion(s) of the CSI resource application can be determined based on the following description: When no available transmission occasion(s) can be found for this CSI resource, the predefined transmission occasion(s) of this CSI resource can be directly used, or transmission occasion(s) corresponding to this CSI resource can be used (For example, transmission occasion(s), among the transmission occasion(s) corresponding to this CSI resource, which satisfy condition 2 (being no later than the CSI reference resource), but does not satisfy condition 1 (the conflict situation in the first frequency band meets the preset requirement), and has a conflict with smallest level. Otherwise, the available transmission occasion(s) of this CSI resource are used.

Optionally, in this embodiment of this application, the solution of step 202f/step 202g can be combined with the solution of step 202d. For example, in the process of using the solution of step 202d, the UE does not expect that no available transmission occasion(s) can be found for a CSI resource.

The embodiments of this application provide a CSI measurement and reporting method. After obtaining target configuration information, a UE executes an operation related to CSI measurement and reporting according to a conflict situation f the CSI resource(s) corresponding to the target configuration information. In this solution, in a flexible duplex mode, for CSI measurement and reporting, the UE can execute the operation related to CSI measurement and reporting according to the conflict situation of the CSI resource(s) configured by a network side and used for CSI measurement and reporting, namely, how to execute CSI measurement and reporting is determined according to the conflict situation of the CSI resource(s) for CSI measurement and reporting, so that this can avoid or relieve the impact caused by the conflict of the CSI resource(s) during CSI measurement and reporting, thereby improving the accuracy of CSI measurement and reporting and reducing the cost of CSI measurement and reporting.

This embodiment of this application provides a CSI measurement and reporting method. FIG. 5 shows a flowchart of a CSI measurement and reporting method provided by this embodiment of this application. As shown in FIG. 5, the CSI measurement and reporting method provided by this embodiment of this application may include step 301 to step 303 below.

Step 301. A network side device sends target configuration information to a UE.

In this embodiment of this application, the target configuration information indicates CSI resource(s) for CSI measurement and reporting; and target configuration information is used for enabling the UE to execute an operation related to CSI measurement and reporting according to a conflict situation of the CSI resource(s) corresponding to the target configuration information.

Step 302. The UE receives the target configuration information sent by the network side device.

Step 303. The UE executes an operation related to CSI measurement and reporting according to a conflict situation of the CSI resource(s) corresponding to the target configuration information.

Optionally, in this embodiment of this application, in a case that the target configuration information includes a plurality of sets of configuration information, the target configuration information is used for enabling the UE to: determine first configuration information from the plurality of sets of configuration information, and execute CSI measurement and reporting based on CSI resource(s) corresponding to the first configuration information, where the first configuration information is configuration information, among the plurality of sets of configuration information, the CSI resource(s) corresponding to the configuration information have no conflict or have a conflict with smallest level.

Optionally, in this embodiment of this application, in a case that the target configuration information includes fourth configuration information corresponding to a plurality of sets of CSI resource(s), the target configuration information is used for enabling the UE to: determine target CSI resource(s) from the plurality of sets of CSI resource(s), and execute CSI measurement and reporting based on the target CSI resource(s), where the target CSI resource(s) are CSI resource(s), among the plurality of sets of CSI resource(s), which have no conflict or have a conflict with smallest level.

It should be noted, the related contents involved in step 301 to step 303 can be found in the description of the above embodiments, and will not be elaborated here.

The embodiments of this application provide a CSI measurement and reporting method. A network side device can send target configuration information to a UE, so that the UE can execute an operation related to CSI measurement and reporting according to a conflict situation of CSI resource(s) corresponding to the target configuration information. In this solution, in a flexible duplex mode, for CSI measurement and reporting, the network side device can configure CSI resource(s) for CSI measurement and reporting to the UE, and the UE can execute the operation related to CSI measurement and reporting according to the conflict situation of the CSI resource(s) configured by a network side and used for CSI measurement and reporting, namely, how to execute CSI measurement and reporting is determined according to the conflict situation of the CSI resource(s) for CSI measurement and reporting, so that this can avoid or relieve the impact caused by the conflict of the CSI resource(s) during CSI measurement and reporting, thereby improving the accuracy of CSI measurement and reporting and reducing the cost of CSI measurement and reporting.

It should be noted, an executive body of the CSI measurement and reporting method provided by the embodiments of this application can be the CSI measurement and reporting apparatus, or a control module configured to implement the CSI measurement and reporting method in the CSI measurement and reporting apparatus.

FIG. 6 is a possible schematic structural diagram of a CSI measurement and reporting apparatus according to an embodiment of this application, applied to a UE. As shown in FIG. 6, the CSI measurement and reporting apparatus 40 may include: an obtaining module 41 and an execution module 42.

The obtaining module 41 is configured to obtain target configuration information, where the target configuration information indicates CSI resource(s) for CSI measurement and reporting; and the execution module 42 is configured to execute an operation related to CSI measurement and reporting according to a conflict situation of the CSI resource(s) corresponding to the target configuration information obtained by the obtaining module 41.

According to the CSI measurement and reporting apparatus provided in this embodiment of this application, in a flexible duplex mode, for CSI measurement and reporting, the CSI measurement and reporting apparatus can execute the operation related to CSI measurement and reporting according to the conflict situation of the CSI resource(s) configured by a network side and used for CSI measurement and reporting, namely, how to execute CSI measurement and reporting is determined according to the conflict situation of the CSI resource(s) for CSI measurement and reporting, so that this can avoid or relieve the impact caused by the conflict of the CSI resource(s) during CSI measurement and reporting, thereby improving the accuracy of CSI measurement and reporting and reducing the cost of CSI measurement and reporting.

In a possible implementation, the execution module 42 is specifically configured to: in a case that the target configuration information includes a plurality of sets of configuration information, determine first configuration information from the plurality of sets of configuration information, and execute CSI measurement and reporting based on CSI resource(s) corresponding to the first configuration information, where the first configuration information is configuration information among the plurality of sets of configuration information, the CSI resource(s) corresponding to the configuration information have no conflict or have a s conflict with smallest level.

In a possible implementation, the execution module 42 is specifically configured to: determine N sets of configuration information among at least one set of second configuration information as the first configuration information; or, for a target CSI reporting type, determine N sets of configuration information among at least one set of second configuration information as the first configuration information, where each set of second configuration information is configuration information, among the plurality of sets of configuration information, which is associated with a time unit and corresponds to the CSI resource(s) having no conflict, and N is a positive integer.

In a possible implementation, the execution module 42 is specifically configured to: determine M sets of configuration information among at least one set of third configuration information as the first configuration information; or, for a target CSI reporting type, determine M sets of configuration information among at least one set of third configuration information as the first configuration information, where each set of third configuration information is configuration information, among the plurality of sets of configuration information, which is associated with a time unit; the M sets of configuration information are configuration information among the at least one set of third configuration information, and the corresponding CSI resource(s) have a conflict with smallest level; and M is a positive integer.

In a possible implementation, the N sets of configuration information and/or the M sets of configuration information are determined by the UE according to at least one of the following: CSI reporting type information, and identifier information of the configuration information.

In a possible implementation, the above CSI reporting type information is determined based on at least one of the following: a CSI report quantity, a CSI reporting configuration type, a CSI granularity in frequency domain, and a type of a channel that carries a CSI report.

In a possible implementation, the execution module 42 is specifically configured to: in a case that the target configuration information includes fourth configuration information corresponding to a plurality of sets of CSI resource(s), determine target CSI resource(s) from the plurality of sets of CSI resource(s), and execute CSI measurement and reporting based on the target CSI resource(s), where the target CSI resource(s) are CSI resource(s), among the plurality of sets of CSI resource(s), which have no conflict or have a with smallest level.

In a possible implementation, the execution module 42 is specifically configured to: determine K sets of CSI resource(s) among at least one set of first CSI resource(s) as the target CSI resource(s), where the at least one set of first CSI resource(s) are CSI resource(s), among the plurality of sets of CSI resource(s), which are used for specific measurement and have no conflict, and K is a positive integer; or, determine L sets of CSI resource(s) among at least one set of second CSI resource(s) as the target CSI resource(s), where the at least one set of second CSI resource(s) are CSI resource(s), among the plurality of sets of CSI resource(s), which are used for specific measurement; the L sets of CSI resource(s) are CSI resource(s), among the at least one set of second CSI resource(s), which have a conflict with smallest level; and L is a positive integer.

In a possible implementation, the K sets of CSI resource(s) and/or the L sets of CSI resource(s) are determined by the UE according to at least one of the following: identifier information of the CSI resource(s)/CSI resource set(s), and bandwidths and/or port number(s) corresponding to the CSI resource(s).

In a possible implementation, the CSI resource(s) corresponding one set of configuration information include at least one of the following:
NZP CSI-RS resource(s) or NZP CSI-RS resource set(s) for channel measurement;
NZP CSI-RS resource(s) or NZP CSI-RS resource set(s) for interference measurement;
NZP CSI-RS resource(s) or NZP CSI-RS resource set(s) for both channel measurement and interference measurement; and
CSI-IM resource(s) or CSI-IM resource set(s) for interference measurement.

In a possible implementation, the execution module 42 is specifically configured to execute at least one of the following:
executing CSI measurement and reporting on the CSI resource(s) corresponding to the target configuration information based on a preset rule;
determining available transmission occasion(s) for the CSI resource(s) corresponding to the target configuration information, and executing, for the available transmission occasion(s), CSI measurement and reporting;
executing CSI measurement on the CSI resource(s) corresponding to the target configuration information based on a preset rule, and in a case that third CSI resource(s) have a conflict, executing CSI reporting by using a target reporting mode, where the third CSI resource(s) are CSI resource(s) used during the CSI measurement;
not expecting that the CSI resource(s) corresponding to the CSI measurement and reporting have a conflict; and
not expecting that the conflict level of the CSI resource(s) corresponding to the CSI measurement and reporting is higher than or no less than a first threshold.

In a possible implementation, the execution module 42 is specifically configured to: in a case that the target configuration information is configured with time restriction information for specific measurement, for a fourth CSI resource for specific measurement, which correspond to the target configuration information, determine latest available transmission occasion(s) of the fourth CSI resource as available transmission occasion(s) of the fourth CSI resource; and in a case that the target configuration information is not configured with time restriction information for specific measurement, for a fourth CSI resource for specific measurement, which correspond to the target configuration information, determine one or more latest available transmission occasion(s) of the fourth CSI resource as available transmission occasion(s) of the fourth CSI resource.

In a possible implementation, in a case that the fourth CSI resource means a resource set, the resource set corresponds to one available transmission occasion, or various resources in the resource set respectively correspond to one available transmission occasion.

In a possible implementation, in a case that a reporting frequency band of the configuration information corresponding to the fourth CSI resource corresponds to a plurality of CSI sub-bands, the available transmission occasion(s) of the fourth CSI resource are any one of the following: available transmission occasion(s) determined based on a frequency band corresponding to the fourth CSI resource, available transmission occasion(s) determined based on the reporting frequency band of the configuration information corresponding to the fourth CSI resource, and available transmission occasion(s) determined based on the various CSI sub-bands respectively.

In a possible implementation, the above available transmission occasion(s) are transmission occasion(s) that satisfy a first condition, and the first condition includes at least one of the following:
a conflict situation in a first frequency band meets a preset requirement, where the preset requirement includes at least one of the following: the CSI resource(s) have no conflict, a ratio of a number of REs that are determined to satisfy a preset condition to a number of all REs is less than or not higher than a second threshold, the number of REs that are determined to satisfy the preset condition is less than or not higher than a third threshold, and a number of REs that are determined to not satisfy the preset condition is higher than or no less than a fourth threshold. The first frequency band is any one of the following: a frequency band configured for CSI resource(s), the reporting frequency band of the configuration information corresponding to the CSI resource(s), and one CSI sub-band among the plurality of CSI sub-bands corresponding to the reporting frequency band of the configuration information corresponding to the CSI resource(s); and
being no later than a CSI reference resource.

In a possible implementation, the target reporting mode includes at least one of the following:
in a case that the CSI resource(s) corresponding to the target configuration information have a conflict, or the conflict of the CSI resource(s) corresponding to the target configuration information is higher than or no less than the first threshold, the UE does not execute CSI reporting corresponding to the target configuration information.
in a case that the UE needs to report sub-band CSI, the UE only reports sub-band CSI corresponding to available CSI sub-bands;
in a case that the UE needs to report wideband CSI, the UE reports wideband CSI corresponding to an available CSI sub-band set;
in a case that the UE needs to report sub-band CSI, the UE reports an invalid value for sub-band CSI corresponding to unavailable CSI sub-band(s);
in a case that the UE needs to report wideband CSI and a reporting frequency band contains unavailable CSI sub-band(s), the UE reports an invalid value for the wideband CSI;
in a case that the UE needs to report sub-band CSI, the UE does not update sub-band CSI corresponding to unavailable CSI sub-band(s);
in a case that the UE needs to report wideband CSI, the UE determines reported wideband CSI based on sub-band CSI corresponding to target sub-bands, where the target sub-bands are various CSI sub-bands corresponding to the reporting frequency band; and
the UE is not required to update a CSI report.

In a possible implementation, the target reporting mode includes: The UE is not required to update a CSI report. The target reporting mode includes any one of the following:
the UE reports a first CSI report, where the first CSI report is a CSI report that is recently reported for the target configuration information; and
the UE reports a second CSI report, where all pieces of information in the second CSI report are set to corresponding invalid values or default values.

In a possible implementation, a mode for determining whether the CSI resource(s) have a conflict is: in a case that an RE occupied by one CSI resource or predefined transmission occasion(s) of the CSI resource satisfies a preset condition, the CSI resource has a conflict. The preset condition is that the RE is within a guard band configured by a network side, or the RE is configured/indicated by the network side as an RE for uplink transmission or a flexible RE.

The CSI measurement and reporting apparatus in the embodiments of this application may be a UE, for example, a UE having an operating system, or a component in a UE, such as an integrated circuit or a chip. The UE may be a terminal or a device other than a terminal. Exemplarily, the UE may include, but is not limited to, the types of the UE11 listed above, and the other device may be a server, a network attached storage (Network Attached Storage, NAS), or the like. The embodiments of this application do not impose a specific limitation on this.

The CSI measurement and reporting apparatus provided in this embodiment of this application can implement various processes implemented by the UE in the method embodiment described above and achieve the same technical effects, details of which are omitted here for brevity.

FIG. 7 is a possible schematic structural diagram of a CSI measurement and reporting apparatus according to an embodiment of this application, applied to a network side device. As shown in FIG. 7, the CSI measurement and reporting apparatus 50 may include: a sending module 51.

The sending module 51 is configured to send target configuration information to a UE, where the target configuration information indicates CSI resource(s) for CSI measurement and reporting, where the target configuration information is used for enabling the UE to execute an operation related to CSI measurement and reporting according to a conflict situation of the CSI resource(s) corresponding to the target configuration information.

According to the CSI measurement and reporting apparatus provided in this embodiment of this application, in a flexible duplex mode, for CSI measurement and reporting, the CSI measurement and reporting apparatus can configure CSI resource(s) for CSI measurement and reporting to the UE, so that the UE can execute the operation related to CSI measurement and reporting according to the conflict situation of the CSI resource(s) configured by a network side and used for CSI measurement and reporting, namely, how to execute CSI measurement and reporting is determined according to the conflict situation of the CSI resource(s) for CSI measurement and reporting, so that this can avoid or relieve the impact caused by the conflict of the CSI resource(s) during CSI measurement and reporting, thereby improving the accuracy of CSI measurement and reporting and reducing the c of CSI measurement and reporting.

In a possible implementation, in a case that the target configuration information includes a plurality of sets of configuration information, the target configuration information is used for enabling the UE to: determine first configuration information from the plurality of sets of configuration information, and execute CSI measurement and reporting based on CSI resource(s) corresponding to the first configuration information, where the first configuration information is configuration information among the plurality of sets of configuration information, the CSI resource(s) corresponding to the configuration information have no conflict or have a conflict with smallest level.

In a possible implementation, in a case that the target configuration information includes fourth configuration information corresponding to a plurality of sets of CSI resource(s), the target configuration information is used for enabling the UE to: determine target CSI resource(s) from the plurality of sets of CSI resource(s), and execute CSI measurement and reporting based on the target CSI resource(s), where the target CSI resource(s) are CSI resource(s), among the plurality of sets of CSI resource(s), which have no conflict or have a conflict with smallest level.

In a possible implementation, a mode for determining whether the CSI resource(s) have a conflict is: in a case that an RE occupied by one CSI resource or a predefined transmission occasion of the CSI resource satisfies a preset condition, the CSI resource has a conflict. The preset condition is that the RE is within a guard band configured by a network side, or the RE is configured/indicated by the network side as an RE for uplink transmission or a flexible RE.

The CSI measurement and reporting apparatus provided in this embodiment of this application can implement various processes implemented by the network side device in the method embodiment described above and achieve the same technical effects, details of which are omitted here for brevity.

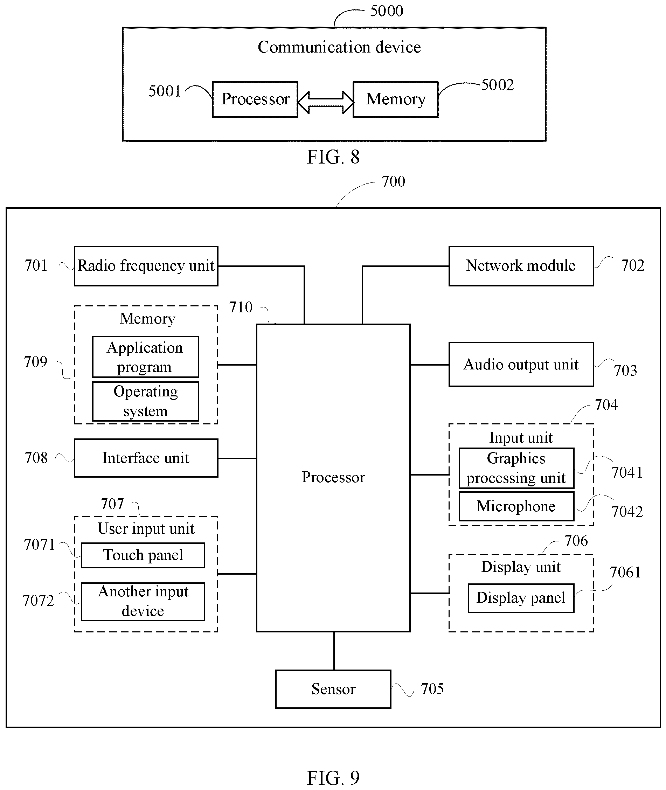

Optionally, as shown in FIG. 8, the embodiments of this application further provide a communication device 5000, including a processor 5001 and a memory 5002. The memory 5002 stores a program or an instruction runnable on the processor 5001. For example, when the communication device 5000 is a UE, the program or instruction, when run by the processor 5001, implements all the steps of the above method embodiment applied to the UE and can achieve the same technical effects, details of which are omitted here for brevity. When the communication device 5000 is a network side device, the program or instruction, when run by the processor 5001, implements all the steps of the method embodiment applied to the network side device, and can achieve the same technical effects, details of which are omitted here for brevity.

The embodiments of this application further provide a UE, including a processor and a communication interface. The processor is configured to: obtain target configuration information. The target configuration information indicates CSI resource(s) for CSI measurement and reporting; and execute an operation related to CSI measurement and reporting according to a conflict situation of the CSI resource(s) corresponding to the target configuration information. The UE embodiment corresponds to the method embodiment applied to the UE. All the implementation processes and implementations of the method embodiment described above can be applied to the UE embodiment, and can achieve the same technical effects. Specifically, FIG. 9 is a schematic structural diagram of hardware of a UE for implementing the embodiments of this application.

The UE 700 includes, but is not limited to: at least some of a radio frequency unit 701, a network module 702, an audio output unit 703, an input unit 704, a sensor 705, a display unit 706, a user input unit 707, an interface unit 708, a memory 709, a processor 710, and the like.

Those skilled in the art can understand that the UE 700 further includes a power supply (such as a battery) for supplying power to the various components. The power supply may be logically connected to the processor 710 by using a power management system, thereby implementing functions such as charging, discharging, and power consumption management by using the power management system. The structures of the UE shown in FIG. 9 constitute no limitation on the UE, and the UE may include more or fewer components than those shown in the figure, or some components may be combined, or a different component deployment may be used, details of which are omitted here.

It should be understood that in the embodiments of this application, the input unit 704 may include a graphics processing unit (Graphics Processing Unit, GPU) 7041 and a microphone 7042, and the GPU 7041 processes image data of static pictures or videos obtained by an image capturing apparatus (such as a camera) in a video capturing mode or an image capturing mode. The display unit 706 may include a display panel 7061, and the display panel 7061 may be configured by using a liquid crystal display, an organic light-emitting diode, or the like. The user input unit 707 includes at least one of a touch panel 7071 and another input device 7072. The touch panel 7071 is also referred to as a touch screen. The touch panel 7071 may include two parts: a touch detection apparatus and a touch controller. The another input device 7072 may include, but not limited to, a physical keyboard, a function key (such as a volume control key or a switch key), a track ball, a mouse, and a joystick, which is not described herein again.

In the embodiments of this application, the radio frequency unit 701 receives downlink data from a network side device and can transmit the data to the processor 710 for processing. In addition, the radio frequency unit 701 may transmit uplink data to the network side device. Generally, the radio frequency unit 701 includes, but is not limited to, an antenna, an amplifier, a transceiver, a coupler, a low noise amplifier, a duplexer, and the like.

The memory 709 is configured to store a software program or an instruction and various data. The memory 709 may mainly include a first storage area for storing the program or instruction, and a second storage area for storing data. The first storage area may store an operating system, an application program or an instruction required by at least one function (for example, a sound playing function and an image display function), and the like. The memory 709 may be a volatile memory or a non-volatile memory, or the memory 709 may include both a volatile memory and a non-volatile memory. The non-volatile memory may be a ROM, a programmable ROM (PROM), an erasable PROM (EPROM), an electrically EPROM (EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 709 in the embodiments of this application includes these and any other suitable types of memories.

The processor 710 may include one or more processing units. Optionally, the processor 710 may integrate an application processor and a modem processor, where the application processor mainly processes operations involving an operating system, a user interface, an application program, and the like, and the modem processor mainly processes a wireless communication signal, such as a baseband processor. It can be understood that, the modem processor may not be integrated into the processor 710.

The processor 710 is configured to: obtain target configuration information, where the target configuration information indicates CSI resource(s) for CSI measurement and reporting; and execute an operation related to CSI measurement and reporting according to a conflict situation of the CSI resource(s) corresponding to the target configuration information.

According to the UE provided in this embodiment of this application, in a flexible duplex mode, for CSI measurement and reporting, the UE can execute the operation related to CSI measurement and reporting according to the conflict situation of the CSI resource(s) configured by a network side and used for CSI measurement and reporting, namely, how to execute CSI measurement and reporting is determined according to the conflict situation of the CSI resource(s) for CSI measurement and reporting, so that this can avoid or relieve the impact caused by the conflict of the CSI resource(s) during CSI measurement and reporting, thereby improving the accuracy of CSI measurement and reporting and reducing the cost of CSI measurement and reporting.

The UE provided in this embodiment of this application can implement various processes implemented by the UE in the method embodiment described above and achieve the same technical effects, details of which are omitted here for brevity.

The embodiments of this application further provide a network side device, including a processor and a communication interface. The communication interface is used for sending target configuration information to a UE, where the target configuration information indicates CSI resource(s) for CSI measurement and reporting, where the target configuration information is used for enabling the UE to execute an operation related to CSI measurement and reporting according to a conflict situation of the CSI resource(s) corresponding to the target configuration information. The network side device embodiment corresponds to the method embodiment applied to the network side device, and all the implementation processes and implementations of the method embodiment described above can be applied to the network side device embodiment and can achieve the same technical effects.

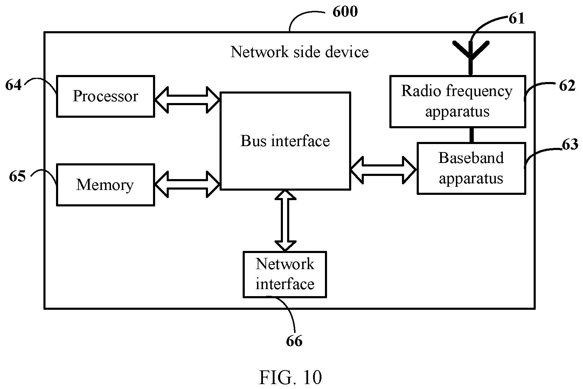

Specifically, the embodiments of this application provide a network side device. As shown in FIG. 10, the network side device 600 includes: an antenna 61, a radio frequency apparatus 62, a baseband apparatus 63, a processor 64, and a memory 65. The antenna 61 is connected to the radio frequency apparatus 62. In an uplink direction, the radio frequency apparatus 62 receives information through the antenna 61 and sends the received information to the baseband apparatus 63 for processing. In a downlink direction, the baseband apparatus 63 processes information to be sent and sends the information to the radio frequency apparatus 62, and the radio frequency apparatus 62 processes the received information and sends the information via the antenna 61.

The method performed by the network side device in the above embodiment may be implemented in the baseband apparatus 63, and the baseband apparatus 63 includes a baseband processor.

The radio frequency apparatus 62 is configured to send target configuration information to a UE, where the target configuration information indicates CSI resource(s) for CSI measurement and reporting, where the target configuration information is used for enabling the UE to execute an operation related to CSI measurement and reporting according to a conflict situation of the CSI resource(s) corresponding to the target configuration information.

According to the network side device provided in this embodiment of this application, in a flexible duplex mode, for CSI measurement and reporting, the network side device can configure CSI resource(s) for CSI measurement and reporting to the UE, and the UE can execute the operation related to CSI measurement and reporting according to the conflict situation of the CSI resource(s) configured by a network side and used for CSI measurement and reporting, namely, how to execute CSI measurement and reporting is determined according to the conflict situation of the CSI resource(s) for CSI measurement and reporting, so that this can avoid or relieve the impact caused by the conflict of the CSI resource(s) during CSI measurement and reporting, thereby improving the accuracy of CSI measurement and reporting and reducing the cost of CSI measurement and reporting.

The network side device provided in this embodiment of this application can implement various processes implemented by the network side device in the method embodiment described above and achieve the same technical effects, details of which are omitted here for brevity.

The baseband apparatus 63 may include, for example, at least one baseband board. A plurality of chips are arranged on the baseband board. As shown in FIG. 10, one of the chips is, for example, a baseband processor, connected to the memory 65 through a bus interface to call a program in the memory 65 to perform the operations of the network device shown in the above method embodiment.

The network side device may further include a network interface 66. The interface is, for example, a common public radio interface (common public radio interface, CPRI).

Specifically, the network side device 600 of the embodiments of this application further includes: an instruction or program stored on the memory 65 and runnable on the processor 64. The processor 64 calls the instruction or program in the memory 65 to perform the method performed by the various modules shown in FIG. 7 and achieve the same technical effects, details of which are omitted here for brevity.

The embodiments of this application further provide a readable storage medium. The readable storage medium stores a program or an instruction. The program or instruction, when run by a processor, implements the various processes of the foregoing method embodiment and can achieve the same technical effects, details of which are omitted here for brevity.

The processor is the processor in the communication device in the above embodiment. The readable storage medium includes a computer-readable storage medium, for example, a computer read-only memory (ROM), a random access memory (RAM), a magnetic disc, a compact disc, or the like.

The embodiments of this application further provide a chip. The chip includes a processor and a communication interface. The communication interface is coupled to the processor. The processor is configured to run or execute a program or an instruction to implement the various processes of the method embodiment, and can achieve the same technical effects, details of which are omitted here for brevity.

It should be understood that the chip mentioned in the embodiments of this application can alternatively be referred to as a system chip, a chip system, or a system-on-chip.

The embodiments of this application further provide a computer program/program product. The computer program/program product is stored in a storage medium. The computer program/program product, when run by at least one processor, implements the various processes of the foregoing method embodiment and can achieve the same technical effects, details of which are omitted here for brevity.

The embodiments of this application further provide a communication system, including: a UE and a network side device. The UE can be configured to execute the steps of the CSI measurement and reporting method described above, and the network side device can be configured to execute the steps of the CSI measurement and reporting method described above.

It should be noted, the terms "include", "comprise", or any other variations thereof here is intended to cover a non-exclusive inclusion, so that a processor, method, object, or apparatus including a series of elements not only includes those elements, but also includes other elements not specifically listed, or includes inherent elements of this process, method, object, or apparatus. Without more limitations, elements defined by the sentence "including one" does not exclude that there are still other same elements in the process, method, object, or apparatus including these elements. In addition, it should be noted that the scope of the methods and devices in the embodiments of this application is not limited to performing functions in the order shown or discussed, but may alternatively include performing functions in a substantially simultaneous manner or in an opposite order according to the functions involved. For example, the methods described may be executed in a different order than that described, and various steps may alternatively be added, omitted, or combined. In addition, features described with reference to some examples may alternatively be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of this application essentially, or the part contributing to the prior art, may be presented in the form of a computer software product. The computer software product is stored in a storage medium (for example, a ROM/RAM, a magnetic disc, or a compact disc) including several instructions to enable a terminal (which may be a mobile phone, a computer, a server, an air conditioner, a network device, or the like) to perform the methods described in all the embodiments of this application.

The embodiments of this application have been described above with reference to the accompanying drawings. This application is not limited to the specific implementations described above, and the specific implementations described above are merely examples and not limitative. Those of ordinary skill in the art may make various forms under the teaching of this application without departing from the spirit of this application and the protection scope of the claims, and these forms shall all fall within the protection of this application.

## Claims

1. A channel state information (CSI) measurement and reporting method, wherein the method comprises:
obtaining, by a user equipment (UE), target configuration information, wherein the target configuration information indicates CSI resource(s) for CSI measurement and reporting; and
executing, by the UE, an operation related to CSI measurement and reporting according to a conflict situation of the CSI resource(s) corresponding to the target configuration information.

2. The method according to claim 1, wherein the executing, by the UE, an operation related to CSI measurement and reporting according to a conflict situation of the CSI resource(s) corresponding to the target configuration information comprises:
in a case that the target configuration information comprises a plurality of sets of configuration information, determining, by the UE, first configuration information from the plurality of sets of configuration information; and
executing CSI measurement and reporting based on CSI resource(s) corresponding to the first configuration information,
wherein the first configuration information is configuration information among the plurality of sets of configuration information, and CSI resource(s) corresponding to the configuration information have no conflict or have a conflict with smallest level.

3. The method according to claim 2, wherein the determining, by the UE, first configuration information from the plurality of sets of configuration information comprises:
determining, by the UE, N sets of configuration information among at least one set of second configuration information as the first configuration information;
or,
for a target CSI reporting type, determining, by the UE, N sets of configuration information among at least one set of second configuration information as the first configuration information,
wherein each set of second configuration information is configuration information, among the plurality of sets of configuration information, which is associated with a time unit and of which the corresponding CSI resource(s) have no conflict, and N is a positive integer.

4. The method according to claim 2, wherein the determining, by the UE, first configuration information from the plurality of sets of configuration information comprises:
determining, by the UE, M sets of configuration information among at least one set of third configuration information as the first configuration information;
or,
for a target CSI reporting type, determining, by the UE, M sets of configuration information among at least one set of third configuration information as the first configuration information,
wherein each set of third configuration information is configuration information, among the plurality of sets of configuration information, which is associated with a time unit; the M sets of configuration information are configuration information among the at least one set of third configuration information, the corresponding CSI resource(s) have a conflict with smallest level; and M is a positive integer.

5. The method according to claim 3 or 4, wherein the N sets of configuration information and/or the M sets of configuration information are determined by the UE according to at least one of the following: CSI reporting type information, and identifier information of the configuration information.

6. The method according to claim 5, wherein the CSI reporting type information is determined based on at least one of the following: a CSI report quantity, a CSI reporting configuration type, a CSI granularity in frequency domain, and a type of a channel that carries a CSI report.

7. The method according to claim 1, wherein the executing, by the UE, an operation related to CSI measurement and reporting according to a conflict situation of the CSI resource(s) corresponding to the target configuration information comprises:
in a case that the target configuration information comprises fourth configuration information corresponding to a plurality of sets of CSI resource(s), determining, by the UE, target CSI resource(s) from the plurality of sets of CSI resource(s); and
executing CSI measurement and reporting based on the target CSI resource(s),
wherein the target CSI resource(s) are CSI resource(s), among the plurality of sets of CSI resource(s), which have no conflict or have a conflict with smallest level.

8. The method according to claim 7, wherein the determining, by the UE, target CSI resource(s) from the plurality of sets of CSI resource(s) comprises:
determining, by the UE, K sets of CSI resource(s) among at least one set of first CSI resource(s) as the target CSI resource(s), wherein the at least one set of first CSI resource(s) are CSI resource(s), among the plurality of sets of CSI resource(s), which are used for specific measurement and have no conflict, and K is a positive integer;
or,
determining, by the UE, L sets of CSI resource(s) among at least one set of second CSI resource(s) as the target CSI resource(s), wherein the at least one set of second CSI resource(s) are CSI resource(s), among the plurality of sets of CSI resource(s), which are used for specific measurement; the L sets of CSI resource(s) are CSI resource(s), among the at least one set of second CSI resource(s), which have a conflict with smallest level; and L is a positive integer.

9. The method according to claim 8, wherein the K sets of CSI resource(s) and/or the L sets of CSI resource(s) are determined by the UE according to at least one of the following: identifier information of CSI resource(s) or CSI resource set(s), and bandwidth(s) and/or port number(s) corresponding to CSI resource(s).

10. The method according to claim 2 or 7, wherein the CSI resource(s) corresponding one set of configuration information comprise at least one of the following:
non-zero power channel state information-reference signal (NZP CSI-RS) resource(s) or NZP CSI-RS resource set(s) for channel measurement;
NZP CSI-RS resource(s) or NZP CSI-RS resource set(s) for interference measurement;
NZP CSI-RS resource(s) or NZP CSI-RS resource set(s) for both channel measurement and interference measurement; and
channel state information-interference measurement (CSI-IM) resource(s) or CSI-IM resource set(s) for interference measurement.

11. The method according to claim 1, wherein the executing, by the UE, an operation related to CSI measurement and reporting according to a conflict situation of the CSI resource(s) corresponding to the target configuration information comprises any one of the following:
executing, by the UE, CSI measurement and reporting on the CSI resource(s) corresponding to the target configuration information based on a preset rule;
determining, by the UE, available transmission occasion(s) for the CSI resource(s) corresponding to the target configuration information, and executing, for the available transmission occasion(s), CSI measurement and reporting;
executing, by the UE, CSI measurement on the CSI resource(s) corresponding to the target configuration information based on a preset rule, and in a case that a third CSI resource(s) has a conflict, executing CSI reporting by using a target reporting mode, wherein the third CSI resource(s) is a CSI resource(s) used during the CSI measurement;
not expecting, by the UE, that the CSI resource(s) corresponding to the CSI measurement and reporting have a conflict; and
not expecting, by the UE, that the conflict level of the CSI resource(s) corresponding to the CSI measurement and reporting is higher or no less than higher than a first threshold value.

12. The method according to claim 11, wherein the determining, by the UE, available transmission occasion(s) for the CSI resource(s) corresponding to the target configuration information comprises:
in a case that the target configuration information has been configured with time restriction information for specific measurement, for a fourth CSI resource for specific measurement, which corresponds to the target configuration information, determining, by the UE, latest and available transmission occasion(s) of the fourth CSI resource as an available transmission occasion of the fourth CSI resource; or
in a case that the target configuration information has not been configured with time restriction information for specific measurement, for a fourth CSI resource for specific measurement, which corresponds to the target configuration information, determining, by the UE, one or more latest available transmission occasions of the fourth CSI resource as available transmission occasions of the fourth CSI resource.

13. The method according to claim 12, wherein in a case that the fourth CSI resource isa resource set, the resource set corresponds to one available transmission occasion, or each resource of the resource set corresponds to one available transmission occasion respectively.

14. The method according to claim 12, wherein in a case that a reporting frequency band of the configuration information corresponding to the fourth CSI resource corresponds to a plurality of CSI sub-bands, the available transmission occasion(s) of the fourth CSI resource is any one of the following: available transmission occasion(s) determined based on a frequency band corresponding to the fourth CSI resource, available transmission occasion(s) determined based on the reporting frequency band of the configuration information corresponding to the fourth CSI resource, and available transmission occasion(s) determined based on each CSI sub-band respectively.

15. The method according to any one of claims 11 to 14, wherein the available transmission occasion(s) are transmission occasion(s) each of which satisfies a first condition, and the first condition comprises at least one of the following:
a conflict situation in a first frequency band meets a preset requirement; the preset requirement comprises at least one of the following: the CSI resource(s) have no conflict, a ratio of a number of resource elements (REs) that are determined to satisfy a preset condition to a number of all REs is less than or not higher than a second threshold value, the number of REs that are determined to satisfy the preset condition is less than or not higher than a third threshold value, and a number of REs that are determined to not satisfy the preset condition is higher than or no less than a fourth threshold value; the first frequency band is any one of the following: a frequency band configured for CSI resource(s), the reporting frequency band of the configuration information corresponding to the CSI resource(s), and one CSI sub-band among the plurality of CSI sub-bands corresponding to the reporting frequency band of the configuration information corresponding to the CSI resource(s); and
being no later than a CSI reference resource.

16. The method according to claim 11, wherein the target reporting mode comprises at least one of the following:
in a case that the CSI resource(s) corresponding to the target configuration information have a conflict, or the conflict level of the CSI resource(s) corresponding to the target configuration information is higher than or no less than the first threshold value, not executing, by the UE, CSI reporting corresponding to the target configuration information;
in a case that the UE needs to report sub-band CSI, only reporting, by the UE, sub-band CSI corresponding to available CSI sub-band(s);
in a case that the UE needs to report wideband CSI, reporting, by the UE, wideband CSI corresponding to an available CSI sub-band set;
in a case that the UE needs to report sub-band CSI, reporting, by the UE, an invalid value for sub-band CSI corresponding to unavailable CSI sub-band(s);
in a case that the UE needs to report wideband CSI and a reporting frequency band contains unavailable CSI sub-band(s), reporting, by the UE, an invalid value for the wideband CSI;
in a case that the UE needs to report sub-band CSI, not updating, by the UE, sub-band CSI corresponding to unavailable CSI sub-band(s);
in a case that the UE needs to report wideband CSI, determining, by the UE, reported wideband CSI based on sub-band CSI corresponding to target sub-band(s), wherein the target sub-band(s) comprise each CSI sub-band corresponding to the reporting frequency band; and
not being required, by the UE, to update a CSI report.

17. The method according to claim 16, wherein the target reporting mode comprises: not being required, by the UE, to update a CSI report;
the target reporting mode comprises any one of the following:
reporting, by the UE, a first CSI report, wherein the first CSI report is a CSI report that is recently reported for the target configuration information; and
reporting, by the UE, a second CSI report, wherein all pieces of information in the second CSI report are set to corresponding invalid values or default values.

18. The method according to claim 1, wherein a mode for determining whether the CSI resource(s) have a conflict is: in a case that an RE occupied by one CSI resource or a predefined transmission occasion of the CSI resource satisfies a preset condition, the CSI resource has a conflict; and
the preset condition is that the RE is within a guard band configured by a network side, or the RE is configured/indicated by the network side as an RE for uplink transmission or a flexible RE.

19. A channel state information (CSI) measurement and reporting method, wherein the method comprises:
sending, by a network side device, target configuration information to a user equipment (UE), wherein the target configuration information indicates CSI resource(s) for CSI measurement and reporting,
wherein the target configuration information is used for enabling the UE to execute an operation related to CSI measurement and reporting according to a conflict situation of the CSI resource(s) corresponding to the target configuration information.

20. The method according to claim 19, wherein in a case that the target configuration information comprises a plurality of sets of configuration information, the target configuration information is used for enabling the UE to: determine first configuration information from the plurality of sets of configuration information, and execute CSI measurement and reporting based on CSI resource(s) corresponding to the first configuration information,
wherein the first configuration information is configuration information among the plurality of sets of configuration information, the CSI resource(s) corresponding to the configuration information have no conflict or having a conflict with smallest level.

21. The method according to claim 19, wherein in a case that the target configuration information comprises fourth configuration information corresponding to a plurality of sets of CSI resource(s), the target configuration information is used for enabling the UE to: determine target CSI resource(s) from the plurality of sets of CSI resource(s), and execute CSI measurement and reporting based on the target CSI resource(s),
wherein the target CSI resource(s) are CSI resource(s), among the plurality of sets of CSI resource(s), which have no conflict or have a conflict with smallest level.

22. The method according to any one of claims 19 to 21, wherein a mode for determining whether the CSI resource(s) have a conflict is: in a case that a resource element (RE) occupied by one CSI resource or a predefined transmission occasion of the CSI resource satisfies a preset condition, the CSI resource has a conflict; and
the preset condition is that the RE is within a guard band configured by a network side, or the RE is configured/indicated by the network side as an RE for uplink transmission or a flexible RE.

23. A channel state information (CSI) measurement and reporting apparatus, applied to a user equipment (UE), wherein the apparatus comprises: an obtaining module and an execution module;
the obtaining module is configured to obtain target configuration information, wherein the target configuration information indicates CSI resource(s) for CSI measurement and reporting; and
the execution module is configured to execute an operation related to CSI measurement and reporting according to a conflict situation of the CSI resource(s) corresponding to the target configuration information obtained by the obtaining module.

24. The apparatus according to claim 23, wherein the execution module is specifically configured to: in a case that the target configuration information comprises a plurality of sets of configuration information, determine first configuration information from the plurality of sets of configuration information, and execute CSI measurement and reporting based on CSI resource(s) corresponding to the first configuration information,
wherein the first configuration information is configuration information among the plurality of sets of configuration information, the CSI resource(s) corresponding to the configuration information have no conflict or have a conflict with smallest level.

25. The apparatus according to claim 24, wherein the execution module is specifically configured to: determine N sets of configuration information among at least one set of second configuration information as the first configuration information; or, for a target CSI reporting type, determine N sets of configuration information among at least one set of second configuration information as the first configuration information,
wherein each set of second configuration information is configuration information, among the plurality of sets of configuration information, which is associated with a time unit and corresponds to the CSI resource(s) having no conflict, and N is a positive integer.

26. The apparatus according to claim 24, wherein the execution module is specifically configured to: determine M sets of configuration information among at least one set of third configuration information as the first configuration information; or, for a target CSI reporting type, determine M sets of configuration information among at least one set of third configuration information as the first configuration information,
wherein each set of third configuration information is configuration information, among the plurality of sets of configuration information, which is associated with a time unit; the M sets of configuration information are configuration information among the at least one set of third configuration information, the corresponding CSI resource(s) having a conflict with smallest level; and M is a positive integer.

27. The apparatus according to claim 23, wherein the execution module is specifically configured to: in a case that the target configuration information comprises fourth configuration information corresponding to a plurality of sets of CSI resource(s), determine target CSI resource(s) from the plurality of sets of CSI resource(s), and execute CSI measurement and reporting based on the target CSI resource(s),
wherein the target CSI resource(s) are CSI resource(s), among the plurality of sets of CSI resource(s), which have no conflict or have a conflict with smallest level.

28. The apparatus according to claim 27, wherein the execution module is specifically configured to: determine K sets of CSI resource(s) among at least one set of first CSI resource(s) as the target CSI resource(s), wherein the at least one set of first CSI resource(s) are CSI resource(s), among the plurality of sets of CSI resource(s), which are used for specific measurement and have no conflict, and K is a positive integer; or, determine L sets of CSI resource(s) among at least one set of second CSI resource(s) as the target CSI resource(s), wherein the at least one set of second CSI resource(s) are CSI resource(s), among the plurality of sets of CSI resource(s), which are used for specific measurement; the L sets of CSI resource(s) are CSI resource(s), among the at least one set of second CSI resource(s), which have a conflict with smallest level; and L is a positive integer.

29. The apparatus according to claim 23, wherein the execution module is specifically configured to execute any one of the following:
executing CSI measurement and reporting on the CSI resource(s) corresponding to the target configuration information based on a preset rule;
determining available transmission occasion(s) for the CSI resource(s) corresponding to the target configuration information, and executing, for the available transmission occasion(s), CSI measurement and reporting; and
executing CSI measurement on the CSI resource(s) corresponding to the target configuration information based on a preset rule, and in a case that third CSI resource(s) have a conflict, executing CSI reporting by using a target reporting mode, wherein the third CSI resource(s) are CSI resource(s) used during the CSI measurement;
not expecting that the CSI resource(s) corresponding to the CSI measurement and reporting have a conflict; and
not expecting that the conflict level of the CSI resource(s) corresponding to the CSI measurement and reporting is higher than or no less than a first threshold value.

30. The apparatus according to claim 29, wherein the execution module is specifically configured to: in a case that the target configuration information has configured time restriction information for specific measurement, for a fourth CSI resource for specific measurement, which correspond to the target configuration information, determine latest available transmission occasion(s) of the fourth CSI resource as available transmission occasion(s) of the fourth CSI resource; and in a case that the target configuration information has not configured time restriction information for specific measurement, for a fourth CSI resource for specific measurement, which correspond to the target configuration information, determine one or more latest available transmission occasions of the fourth CSI resource as available transmission occasions of the fourth CSI resource.

31. A channel state information (CSI) measurement and reporting apparatus, applied to a network side device, wherein the apparatus comprises: a sending module;
the sending module is configured to send target configuration information to a user equipment (UE), wherein the target configuration information indicates CSI resource(s) for CSI measurement and reporting,
wherein the target configuration information is used for enabling the UE to execute an operation related to CSI measurement and reporting according to a conflict situation of the CSI resource(s) corresponding to the target configuration information.

32. The apparatus according to claim 31, wherein in a case that the target configuration information comprises a plurality of sets of configuration information, the target configuration information is used for enabling the UE to: determine first configuration information from the plurality of sets of configuration information, and execute CSI measurement and reporting based on CSI resource(s) corresponding to the first configuration information,
wherein the first configuration information is configuration information among the plurality of sets of configuration information, the CSI resource(s) corresponding to the configuration information have no conflict or have a conflict with smallest level.

33. The apparatus according to claim 31, wherein in a case that the target configuration information comprises fourth configuration information corresponding to a plurality of sets of CSI resource(s), the target configuration information is used for enabling the UE to: determine target CSI resource(s) from the plurality of sets of CSI resource(s), and execute CSI measurement and reporting based on the target CSI resource(s),
wherein the target CSI resource(s) are CSI resource(s), among the plurality of sets of CSI resource(s), which have no conflict or have a conflict with smallest level.

34. A user equipment (UE), comprising a processor, a memory, and a program or an instruction stored in the memory and runnable on the processor, wherein the program or the instruction, when run by the processor, implements the steps of the channel state information (CSI) measurement and reporting method according to any one of claims 1 to 18.

35. A network side device, comprising a processor, a memory, and a program or an instruction stored on the memory and runnable on the processor, wherein the program or the instruction, when run by the processor, implements the steps of the channel state information (CSI) measurement and reporting method according to any one of claims 19 to 22.

36. A communication system, wherein the communication system comprises the channel state information (CSI) measurement and reporting apparatus according to any one of claims 23 to 30, and the channel state information (CSI) measurement and reporting apparatus according to any one of claims 31 to 33; or,
the communication system comprises the user equipment (UE) according to claim 34 and the network side device according to claim 35.

37. A readable storage medium, having a program or an instruction stored thereon, wherein the program or the instruction, when run by the processor, implements the steps of the channel state information (CSI) measurement and reporting method according to any one of claims 1 to 18, or the steps of the CSI measurement and reporting method according to any one of claims 23 to 30.

38. A chip, wherein the chip comprises a processor and a communication interface; the communication interface is coupled to the processor; and the processor is configured to run a program or an instruction to implement the steps of the channel state information (CSI) measurement and reporting method according to any one of claims 1 to 18, or the steps of the CSI measurement and reporting method according to any one of claims 23 to 30.

39. A computer program product, stored in a storage medium, wherein the program product is run by at least one processor to implement the steps of the channel state information (CSI) measurement and reporting method according to any one of claims 1 to 18, or the steps of the CSI measurement and reporting method according to any one of claims 23 to 30.

40. A user equipment (UE), wherein the UE is configured to execute the channel state information (CSI) measurement and reporting method according to any one of claims 1 to 18.

41. A network side device, wherein the network side device is configured to execute the channel state information (CSI) measurement and reporting method according to any one of claims 23 to 30.
